(19) Europäisches Patentamt
European Patent Office
Office européen des brevets

(11) **EP 2 062 198 B1**

(12) **EUROPÄISCHE PATENTSCHRIFT**

(45) Veröffentlichungstag und Bekanntmachung des Hinweises auf die Patenterteilung:
**14.03.2012  Patentblatt 2012/11**

(21) Anmeldenummer: **07846272.8**

(22) Anmeldetag: **29.10.2007**

(51) Int Cl.:
*G06K 9/00* *(2006.01)*     *B60Q 1/14* *(2006.01)*

(86) Internationale Anmeldenummer:
**PCT/DE2007/001936**

(87) Internationale Veröffentlichungsnummer:
**WO 2008/064626 (05.06.2008 Gazette 2008/23)**

(54) **ERKENNUNG VON FAHRZEUGLICHTERN MIT EINER KAMERA**

RECOGNITION OF VEHICLE LIGHTS BY MEANS OF A CAMERA

DÉTECTION DES FEUX D'UN VÉHICULE AU MOYEN D'UNE CAMÉRA

(84) Benannte Vertragsstaaten:
**DE FR**

(30) Priorität: **27.11.2006  DE 102006055903**

(43) Veröffentlichungstag der Anmeldung:
**27.05.2009  Patentblatt 2009/22**

(73) Patentinhaber: **ADC Automotive Distance Control Systems GmbH**
**88131 Lindau (DE)**

(72) Erfinder:
• **HEINRICH, Stefan**
**85134 Stammham (DE)**
• **SCHULER, Reinhard**
**9445 Rebstein (CH)**

(56) Entgegenhaltungen:
**US-A- 5 990 469     US-A1- 2002 040 962**

**Beschreibung**

Die Erfindung betrifft ein Verfahren zur Erkennung von Fahrzeuglichtern mit einem Farbkamerasensor. Ein solches Verfahren ist z. B. zur automatischen Fernlichtsteuerung von Kraftfahrzeugscheinwerfern anwendbar.

Eine automatische Lichtsteuerung basierend auf einem Fotosensor ist in der Offenlegungsschrift DE 19820348 beschrieben. Dazu wird im Kraftfahrzeug ein hochsensibler Fotosensor vorgesehen, der in Fahrtrichtung nach vorn ausgerichtet ist. Die Scheinwerfer eines entgegenkommenden Fahrzeugs treffen auf den Fotosensor, wenn sich ein Kraftfahrzeug nähert und das Fernlicht wird ausgeschaltet. Wird wieder eine hinreichend kleine Lichtintensität vom Fotosensor detektiert, wenn das entgegenkommende Fahrzeug das eigene Fahrzeug passiert hat und sich außerhalb des Erfassungsbereichs des Fotosensors befindet, wird das Fernlicht wieder eingeschaltet.

Bei dieser sehr einfachen Methode wird nur die Lichtintensität gemessen, nicht aber die Art der "Lichtquelle" Umgebungslicht, Reflektor, Fahrzeugscheinwerfer, Straßenbeleuchtung etc. klassifiziert wird. Dies kann zu einer Fehlfunktion der Beleuchtungssteuerung führen.

Die US 2002/0040962 A1 zeigt eine gattungsbildende Lichtsteuerung für ein Fahrzeug mittels eines bildgebenden Sensors.

Das Patent US 5,990,469 zeigt eine Steuerung für Bildsensorarrays mit dem Fahrzeugvorder- und Fahrzeugrücklichter detektiert werden können.

Aufgabe der Erfindung ist es daher, ein sicheres und kostengünstiges Verfahren zur Erkennung von Fahrzeuglichtern mit einem Monokamerasensor in einer Fahrzeugumgebung anzugeben.

Diese Aufgabe ist erfindungsgemäß gelöst durch Verfahren und Vorrichtung gemäß den unabhängigen Patentansprüchen. Vorteilhafte Weiterbildungen sind den Unteransprüchen zu entnehmen.

Es wird ein Verfahren zur Erkennung von Fahrzeuglichtern mit einem Farbkamerasensor und einer Datenverarbeitungseinheit angegeben. Um Kosten zu sparen, wird der Rechenaufwand für die Erkennung von Fahrzeuglichtern reduziert. Dazu werden zur Selektion von Fahrzeuglichtern ausschließlich die Pixel ausgewertet, die für rotes Licht empfindlich sind. Diese Pixel werden in dieser Schrift auch als rote Pixel bezeichnet. Bei Benutzung eines handelsüblichen RGB Farbkamerachips wird somit nur ein Viertel der Datenmenge ausgewertet. Entsprechend kann eine kostengünstige Datenverarbeitungseinheit mit geringer Kapazität benutzt werden. Die selektive Untersuchung des roten Lichts erkennt im Kamerabild sowohl die roten Rücklichter eines Kraftfahrzeugs als auch die weißen Frontscheinwerfer, die ebenfalls einen roten Spektralanteil aufweisen. Liegt nun die gemessenen Intensität oberhalb des Rauschens handelt sich bei den Lichtpunkten im Bild um potentielle Fahrzeuglichter. Erfindungsgemäß werden Lichtpunkte mit einer Intensität des roten Lichts oberhalb eines vorgegebenen Schwellwerts S1 als potentielle Fahrzeugscheinwerfer identifiziert. Dieser Zuordnungsvorschrift liegt die Erfahrung zugrunde, dass Scheinwerfer anderer Fahrzeuge i. d. R. vergleichsweise hell sind. Als Lichtpunkte werden in dieser Schrift helle Bereiche mit einer beliebigen Form im Kamerabild bezeichnet. Lichtpunkte mit einer Intensität unterhalb eines vorgegebenen Schwellwerts S2 werden als potentielles Fahrzeugrücklicht identifiziert. Dieser Zuordnungsvorschrift liegt die Erfahrung zugrunde, dass Rücklichter anderer Fahrzeuge vergleichsweise dunkel abgebildet werden und eine vorgegebene Intensität i. d. R. nicht überschreiten. Der Schwellwert S1 ist bei diesem Verfahren größer oder gleich dem Schwellwert S2.

In einer bevorzugten Ausgestaltung der Erfindung werden Lichtpunkte, die bei der Rotlichtanalyse als potentielle Fahrzeugrücklichter erkannt worden sind weiter untersucht, um sicherzustellen, dass es sich tatsächlich um Rücklichter eines Fahrzeugs handelt. Dazu wird der spektrale Rotanteil eines Lichtpunkts mit einem oder mehreren anderen Spektralanteilen verglichen. Bei einem RGB-Kamera-Chip wäre dies ein Vergleich der Intensität des roten Lichts mit der Intensität des blauen Lichts und / oder mit der Intensität des grünen Lichts. Nur rote Lichtpunkte werden als Fahrzeugrückleuchten identifiziert.

In einer weiteren vorteilhaften Ausgestaltung der Erfindung werden bei Lichtpunkten, die bei der Rotlichtanalyse als potentielle Fahrzeugrücklichter erkannt worden sind, der zeitliche Intensitätsverlauf und/oder die zeitabhängige Bewegung des Lichtpunkts im Bild analysiert. Als Fahrzeugrücklichter werden Lichtpunkte identifiziert, die rot sind und deren zeitlicher Intensitätsverlauf (z. B. Intensitätsgradient, Intensitätsschwankung etc.) dem einer selbststrahlenden Lichtquelle und/oder deren zeitabhängigen Bewegung im Bild dem eines bewegten Objekts entspricht.

In einer bevorzugten Ausgestaltung der Erfindung werden Lichtpunkte, die bei der Rotlichtanalyse als potentielle Fahrzeugscheinwerfer erkannt worden sind, weiter untersucht. Dazu wird der zeitliche Intensitätsverlauf (z. B. Intensitätsgradient, Intensitätsschwankung etc.) und / oder deren zeitabhängigen Bewegung im Bild untersucht, um Fahrzeugscheinwerfer von anderen Lichtquellen, z. B. Reflektoren zur Fahrbahnmarkierung, zu unterscheiden.

Die Erfindung wird nachfolgend anhand von Ausführungsbeispielen und Abbildungen näher erläutert.

Fig. 1: RGB-Farbkamerachip

Fig. 2: Intensitätsschwankung S aufgetragen über der Intensität I für entgegenkommende Frontschweinwerfer (oben) und Reflektoren (unten) in einem vorgegebenen Intensitätsbereich.

Fig. 3: Schematische Häufigkeitsverteilung der Intensität von Reflektoren und Fahrzeuglichtern

Fig. 4: Nickbewegung

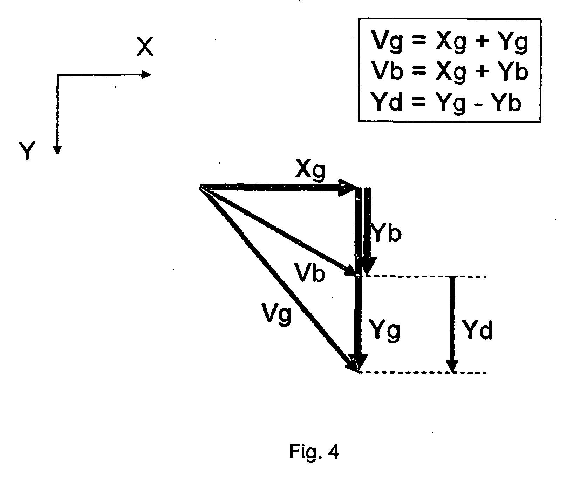

Fig. 4: Nickbewegung

Alle hier beschriebenen Merkmale können einzeln oder in einer beliebigen Kombination zur Erfindung beitragen. Ein zeitlicher Ablauf der Verfahrensschritte ist durch die hier gewählte Reihenfolge nicht zwingend vorgegeben.

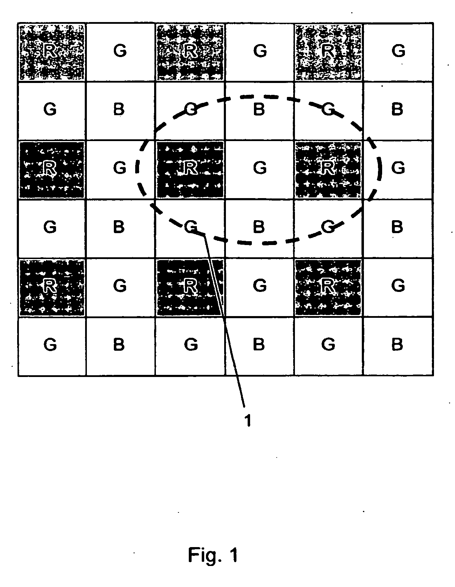

In einem Ausführungsbeispiel des erfindungsgemäßen Verfahrens werden in einem ersten Schritt ermittelt, ob die Helligkeit eines roten Pixels oberhalb eines vorgegeben Schwellwerts liegt, der i. d. R. typisch für das Rauschen des Kamerachips ist. Zur besseren Anschaulichkeit des Verfahrens ist in Abbildung 1 die Pixelverteilung eines typischen RGB-Farbkamerachips dargestellt. Die roten Pixel sind grau hinterlegt. Es ist aus der Abbildung ersichtlich, dass das Verhältnis roter zu blauer zu grüner Pixel 1:1:2 beträgt. Bei ausschließlicher Auswertung der roten Pixel wird also nur ein Viertel der anfallenden Datenmenge ausgewertet. Mit einer gestrichelten Linie wird die Lage eines beliebigen Lichtpunkts 1 dargestellt. In einem zweiten Verfahrensschritt werden lokale Maxima ermittelt. Dazu wird die Helligkeit eines roten Pixels mit der Helligkeit der benachbarten roten Pixel verglichen. Ist die Helligkeit eines roten Pixels größer als die der Nachbarn liegt ein lokales Maximum vor. Gleiches gilt natürlich auch für einen Bereich mit großer Helligkeit, der mehrere rote Pixel umfasst, und von dunkleren roten Pixeln umgeben ist. In einem dritten Verfahrensschritt wird ermittelt, ob es sich bei dem lokalen Maximum um einen hellen Lichtpunkt 1 oder einen weniger hellen Lichtpunkt 1 handelt. Dazu wird ein Helligkeitsschwellwert S vorgegeben. Lichtpunkte 1 mit einer Helligkeit oberhalb des Schwellwerts S sind potentielle Fahrzeugscheinwerfer. Lichtpunkte 1 mit einer Helligkeit unterhalb des Schwellwerts S sind potentielle Fahrzeugrücklichter. Lichtpunkte 1, die potentielle Fahrzeugscheinwerfer sind, werden gespeichert und ggf. wird der zeitl. Verlauf der Intensität und / oder die Bewegung des Lichtpunkts 1 im Bild untersucht, um Scheinwerfer z. B. von Reflektoren zur Fahrbahnbegrenzung zu unterscheiden. Diese Methoden werden beispielhaft weiter unten erläutert. Lichtpunkte, die potentielle Rücklichter sind werden in einem weiteren Verfahrensschritt dahingehend untersucht, ob es sich um rote Lichter handelt. Dazu werden zumindest teilweise die andersfarbigen Pixel im Bereich des Lichtpunkts 1 ausgewertet. Wird ein RGB-Kamerchip benutzt, werden die grünen und / oder die blauen Pixel ausgewertet. Die Helligkeit der blauen und / oder grünen Pixel wird mit der Helligkeit der roten Pixel verglichen. Ist die Helligkeit der roten Pixel wesentlich größer als die Helligkeit der andersfarbigen Pixel handelt es sich bei dem Lichtpunkt 1 um ein rotes Licht und damit um ein Fahrzeugrücklicht.
In einem weiteren Ausführungsbeispiel wird der zeitliche Verlauf der Intensität und / oder die absolute Intensität und / oder die Bewegung des Lichtpunkts im Bild untersucht, um Rücklichter z. B. von Reflektoren zur Fahrbahnbegrenzung zu unterscheiden

Im Folgenden werden weitere Verfahren zur Klassifizierung von Lichtpunkten 1 in einem Kamerabild angegeben. Zur Bewegungs- und Intensitätsanalyse von Lichtpunkten 1 kann sowohl die Helligkeit der Pixel einer Farbe als auch die Helligkeit von Pixeln mit verschiedenen Farben beitragen.

Auswahl eines geeigneten Bildausschnitts

In einem Ausführungsbeispiel der Erfindung werden Bildausschnitte (Fenster) bestimmt, in denen nach Fahrzeugen gesucht wird. Durch die Fensterverarbeitung wird der Bildverarbeitungs-Aufwand deutlich reduziert, da nicht mehr das gesamte Bild nach Fahrzeugen durchsucht werden muss. Zudem kann bei Kenntnis der Fahrspur das Fenster so auf die zu erwartete Fahrspur positioniert werden, dass Fehldetektionen vom Straßenrand vermindert werden. Die Größe des Fensters wird so gewählt, dass die gesuchten Fahrzeugobjekte hineinpassen. Es wird ein Randbereich hinzugefügt, der umso größer ist, je ungenauer die Kenntnis über die zu erwartende Fahrzeugposition ist. Die vertikale Position, Breite und die Höhe des Suchfensters wird nach einer Entfernungshypothese aus dem Wissen der Kamera-Abbildungsgleichung positioniert (siehe Abschnitt_ Analyse der Bewegung von Lichtpunkten im Bild). Die horizontale Positionierung des Fensters erfolgt aufgrund des Wissens über den Verlauf der Fahrspur vor dem Fahrzeug aus einer vorangegangenen Fahrspurbestimmung mittels Bildverarbeitung. Diese Daten werden z.B. von einem im Fahrzeug integrierten Lane Departure Waming System, Fahrerassistenzsystem (ACC), einer digitaler Karte und satellitengestützter Positionsbestimmung (z.B. aus Navigations System) oder aus einer Kursschätzung, die mittels Inertialsensorik gewonnen wird, zur Verfügung gestellt.

Analyse der Intensität von Lichtpunkten

I) Analyse der zeitlichen Intensitätsschwankungen von Lichtpunkten

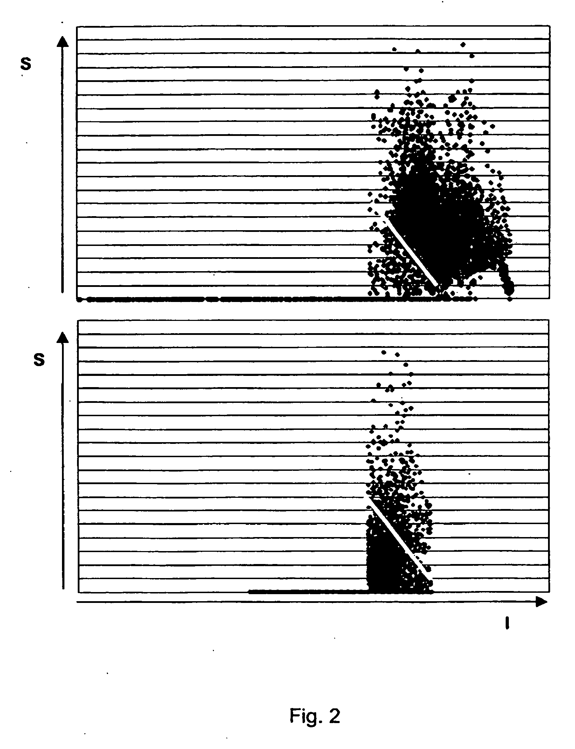

Wird ein Lichtpunkt erkannt, wird er in der Bilderfolge verfolgt (getrackt). Die Intensität eines verfolgten Lichtpunkts wird in einer Vielzahl von Bildern bestimmt und der Intensitätsverlauf wird analysiert. Von besonderem Interesse dabei ist die Schwankung der Intensität um einen Mittelwert. Da die Intensität eines Lichtpunkts von der Entfernung abhängt, die sich bei einem bewegten Fahrzeug mit Kamera i. d. R. kontinuierlich verändert, wird ein gleitender Mittelwert zur Bestimmung der Intensitätsschwankung benutzt. Eine alternative Methode, die Intensitätsschwankung darzustellen, besteht darin, den Hub von aufeinanderfolgenden Messwerten zu bestimmen. Vorzugsweise wird der Betrag des Hubs über die Intensität aufgetragen. In Fig. 2 oben ist für entgegenkommende Lichtquellen und in 2 unten für Reflektoren in einem vorgegebenen Intensitätsbereich die Intensitätsschwankung aufgetragen. Es ist sofort erkennbar, dass die ermittelte Intensitätsschwankung in dem vorgegebenen Intensitätsbereich für den Scheinwerfer eines entgegenkommenden Fahrzeugs im Durchschnitt deutlich größer ist als die Intensitätsschwankung für einen Reflektor. In beiden Abbildungen Figur 2 oben und 2 unten ist zur Verdeutlichung die gleiche weiße Linie eingezeichnet. In Figur 2 oben (entgegenkommende Fahrzeugscheinwerfer) befindet sich eine deutliche Überzahl der Intensitätsschwankungsgeschichte oberhalb der Linie, wohingegen in Figur 2 unten (Reflektoren zur Fahrbahnbegrenzung) die deutliche Überzahl der Varianzwerte unterhalb der Linie angeordnet ist. Die Ursache für das unterschiedliche Verhalten der Varianz ist die spezifische Rückstrahlcharakteristik von Reflektoren, die das Licht in die Richtung zurückreflektieren aus der es gekommen ist. Da Scheinwerfer und Kamerasensor in einem Kraftfahrzeug derselben Eigenbewegung des eigenen Kraftfahrzeugs unterworfen sind, ist der Einfallwinkel des reflektierten Lichts auf den Kamerachip und damit die Intensität des Lichtpunkts vergleichsweise konstant. Handelt es sich um eine Lichtquelle, so weist zumindest das eigene Fahrzeug, das Träger der Kamera ist, eine Eigenbewegung z. B. Nickbewegung auf. Der Einfallwinkel des Lichts auf den Kamerachip und damit die Intensität des Lichtpunkts im Bild ist vergleichsweise wenig konstant. Diese Eigenschaft wird zur Unterscheidung eines Reflektors von einer selbststrahlenden Lichtquelle genutzt. Es werden Lichtpunkte deren Intensitätsschwankungswerte hauptsächlich unterhalb der Grenzlinie angeordnet sind als Reflektor klassifiziert. Lichtpunkte deren Intensitätsschwankungswerte hauptsächlich oberhalb der Linie liegen werden als selbststrahlende Lichtpunkte erkannt. Der Verlauf einer solchen Grenzlinie kann fest in einem Programm zur Datenverarbeitung vorgegeben sein. Eine Alternative besteht darin, den Verlauf der Grenzlinie an vorher aufgenommene Messwerte anzupassen. Dazu werden die Varianzwerte der Lichtpunkte und ihre Klassifikation (Reflektor, selbststrahlende Lichtquelle) rückschauend betrachtet. Die Klassifikation kann mit Hilfe des Varianzkriteriums und/oder anderen Methoden erfolgen. Die Grenzlinie wird so berechnet, dass möglichst wenige Varianzwerte von Reflektoren oberhalb und möglichst wenige Varianzwerte von selbststrahlenden Lichtquellen unterhalb der Linie liegen.

II) Analyse der absoluten Intensität von Lichtpunkten

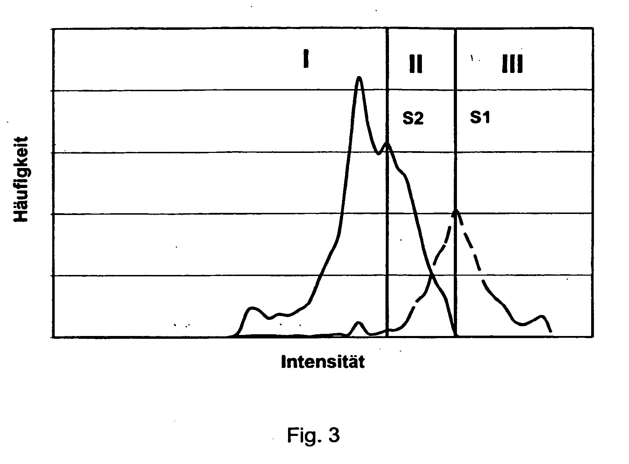

Die Intensität des von Reflektoren zurückgestrahlten Lichts der eigenen Scheinwerfer ist proportional zu $1/x^4$. Wobei x den Abstand zwischen Reflektor und Kraftfahrzeug angibt. Wohingegen die Intensität von selbststrahlenden Lichtquellen, i. d. R. Fahrzeugscheinwerfer, proportional zu $1/x^2$ ist. D. h. bei gleicher Entfernung werden Fahrzeugscheinwerfer eines entgegenkommenden Fahrzeugs heller im Bild abgebildet als Reflektoren, die das Scheinwerferlicht des eigenen Fahrzeugs reflektieren. Eine typische Häufigkeitsverteilung über der Intensität ist in Fig. 3 abgebildet. Die Häufigkeitsverteilung von selbststrahlenden Lichtquellen ist mit einer gestrichelten und die von Reflektoren mit einer durchgezogenen Linie dargestellt. Es ist deutlich erkennbar, dass die Häufigkeitsverteilungen zueinander versetzt sind. Es lassen sich in der Abbildung drei Intensitätsbereiche identifizieren. In dem mit I gekennzeichnete niedrigen Intensitätsbereich werden nur Reflektoren, in dem mit II gekennzeichneten mittleren Intensitätsbereich werden Reflektoren und selbststrahlende Lichtquellen und in dem mit III gekennzeichneten hohen Intensitätsbereich werden nur selbststrahlende Lichtquellen abgebildet. Demnach werden Lichtpunkte mit einer Intensität oberhalb eines oberen Schwellwerts S1 von einem Scheinwerfer verursacht. Lichtpunkte mit einer Intensität unterhalb eines unteren Schwellwerts S2 werden mit einer hohen Wahrscheinlichkeit von einem Reflektor verursacht. Weist ein Lichtpunkt eine Intensität auf, die zwischen den beiden Schwellwerten S1 und S2 liegt, kann mit dieser Methode keine Aussage getroffen werden, ob es sich um einen Reflektor oder eine selbststrahlende Lichtquelle handelt.

III) Analyse des Intensitätsgradienten

Zudem wird der Intensitätsverlauf des zumindest einen Lichtpunkts aufgenommen. Die Intensität des von Reflektoren zurückgestrahlten Licht der eigenen Scheinwerfer ist proportional zu $1/x^4$. Wobei x den Abstand zwischen Reflektor und Kraftfahrzeug angibt. D. h. anhand des zeitlichen Intensitätsverlaufs kann ein Lichtpunkt als passive Lichtquelle (Reflektor) oder aktive, selbststrahlende Lichtquelle klassifiziert werden. Diese Zuordnung wird in einer bevorzugten Ausgestaltung der Erfindung anhand der bestimmten Entfernung des Lichtpunkts und der Kenntnis über die Leuchtkraft der eigenen Scheinwerfer und den Reflektionseigenschaften von üblichen Reflektoren am Straßenrand verifiziert. In einer Ausgestaltung der Erfindung wird die Entfernungsbestimmung genutzt, um einen voraussichtlichen Intensitätsverlauf für eine passive und eine aktive Lichtquelle zu ermitteln und zur Verifikation, ob es sich um einen Reflektor oder eine aktive Lichtquelle handelt. Ebenso wird in einer bevorzugten Ausgestaltung der Erfindung die Intensität des gemessenen Lichtpunkts mit der erwarteten Intensität eines Frontscheinwerfers bzw. eines Rücklichts der üblichen Leuchtstärke in der bestimmten Entfernung verglichen. Die gleiche Vorhersage wird für übliche Reflektoren in der bestimmten Entfernung unter der Annahme der Bestrahlung durch die eigenen Frontscheinwerfer gemacht. Die berechneten Werte werden zur Verifikation genutzt, ob es sich um einen Reflektor oder eine aktive Lichtquelle (Fahrzeuglichter) handelt. Es wird in dem hier angegebenen Verfahren ein Lichtpunkt als Reflektor identifiziert, wenn der zeitliche Verlauf der Bewegung des Lichtpunkts im Wesentlichen dem Verhalten eines relativ zur Fahrbahn stehenden Objekts genügt und der zeitliche Verlauf der Intensität dem erwarteten Verlauf für eine passive Lichtquelle im Wesentlichen entspricht. Zudem wird ein Lichtpunkt als Fahrzeuglicht identifiziert, wenn der zeitliche Verlauf der Bewegung des Lichtpunkts im Wesentlichen dem Verhalten eines relativ zur Fahrbahn bewegten Objekts genügt und der zeitliche Verlauf der Intensität dem erwarteten Verlauf für eine aktive Lichtquelle im Wesentlichen entspricht.

### Analyse der Bewegung von Lichtpunkten im Bild

I) Bildfluß

Zur Erkennung von Fahrzeuglichtern wird der optische Fluss von hellen punktfömigen Bildobjekten bestimmt, die mittels bekannter Methoden der Bildverarbeitung (Korrelation, morphologischer Filterung, Regionen-Segmentierung) extrahiert werden. Steht der Bildfluss dieser Bildobjekte in Einklang mit der Eigenbewegung (Geschwindigkeit, Gierbewegung) kann von stehenden Lichtpunkten ausgegangen werden. Dazu wird der hypothetische Bildfluss für unbewegte Bildpunkte in verschiedenen Entfernungen bestimmt und mit dem tatsächlichen Bildfluss der aus dem aktuellen Bild extrahierten Lichtpunkte verglichen. Ist der Bildfluss dieser Lichtpunkte im Wesentlichen durch die bekannte Eigenbewegung (Geschwindigkeit, Gierbewegung) geprägt handelt es sich um stehende Lichtpunkte. Trifft keine der Hypothesen für den gemessenen Bildfluss eines Lichtpunktes zu, dann muss es sich um ein bewegtes Licht handeln. Bei der Unterscheidung ist die ungefähre Kenntnis der Entfernung der abgebildeten Lichtpunkte zum Fahrzeug nützlich, da der Bildfluss neben der Eigenbewegung des Kamera-Fahrzeugs und der möglichen Bewegung der Lichtpunkte auch von der Entfernung der Lichtpunkte abhängt. Nahe stehende Objekte weisen einen stärkeren Bildfluss auf als entfernte stehende Objekte.

Eine Methode zur Abstandsbestimmung eines Punktes bzw. Objekts $d$ mit einer Monokamera dargestellt. Der Abstand zur Monokamera wird aus $h$ der Kameraeinbauhöhe, $\alpha$ dem Kameranickwinkel, $y$ der Bildzeile des Punktes, $\eta$ der Pixelgröße und $f$ die Kamerabrennweite zu

$$d = h \cdot \frac{1 - t \cdot \tan\alpha}{t + \tan\alpha} \qquad \text{mit } t = y \cdot \frac{\eta}{f}$$

bestimmt. Sind also die vorgenannten Parameter durch eine Justage der Blickrichtung der Kamera bekannt, kann die Entfernung d bestimmt werden.

II) Störung verursacht durch die Nickbewegung des eigenen Fahrzeugs

Ein häufig auftauchendes Problem bei der Auswertung der Bewegungsrichtung einer Lichtquelle ist das Schaukeln der Karosserie des eigenen Fahrzeugs und damit der Kamera. Das führt dazu, dass der Bildfluss von Objekten nicht nur von der Geschwindigkeit und Gierbewegung des Kamera-Fahrzeugs beeinflusst wird, sondern auch von der rotatorischen Bewegung der Karosserie relativ zur Fahrbahnebene, der Nickbewegung des Fahrzeugs. Im Gegensatz zu Geschwindigkeit und Gierbewegung lässt sich die Nickbewegung nicht ohne weiteres durch Sensoren messen. Diese Störung tritt verstärkt bei Fahrbahnunebenheiten sowie bei Längsbeschleunigung (in positiver wie negativer Richtung) auf. Unabhängig davon, wie gut das Fahrwerk des Kamera-Fahrzeugs die dabei auftretenden Kräfte dämpfen kann, sind Störungen durch Nickbewegungen immer vorhanden.

Im Folgenden wird eine Möglichkeit angegeben, die Nickbewegung zu ermitteln, um eine anschließende Kompensation zu ermöglichen. Dazu werden die Kamerabilder selbst analysiert. Taucht das Fahrwerk vorn ein, neigt sich die Kamera nach unten und alle Punkte im Videobild verschieben sich entsprechend nach oben, umgekehrt bewegen sich die Punkte nach unten, wenn die Karosserie wieder zurück federt. Man kann nun ausnutzen, dass diese Bewegung im Videobild für alle Punke gleich ist und nur in vertikaler Richtung auftritt, d.h. die horizontale Bewegungskomponente der Bildpunkte bleibt von der Nickbewegung der Kamera unbeeinflusst. Unter der Annahme, dass es sich bei einem betrachteten Bildpunkt um ein stehendes Objekt handelt, kann man aus seiner Position im Bild, bekannter Geschwindigkeit und Gierbewegung des Kamera-Fahrzeugs sowie allein aus seiner horizontalen Verschiebung die Entfernung dieses Punktes zur Kamera berechnen. Ob es sich um ein stehendes oder bewegtes Objekt handelt kann z.B. anhand der Analyse der Intensität in einer Bilderfolge ermittelt werden. Kennt man die Entfernung des Punktes aus der horizontalen Verschiebung, kann man damit wiederum die zugehörige vertikale Verschiebung ermitteln. Da die horizontale Verschiebung des Punktes, wie oben erläutert, unabhängig von der Nickbewegung ist, trifft dies nun auch auf die ermittelte zugehörige vertikale Verschiebung zu. Falls die im Videobild gemessene Verschiebung jetzt durch Nickbewegung der Kamera gestört ist, erkennt man das durch eine Differenz zwischen der gemessenen und der berechneten vertikalen Verschiebung. Mit der ermittelten Nickbewegung können nun die entsprechenden Bilddaten korrigiert werden. In Figur 3 ist die Ermittlung des Nickwinkels schematisch als Vektordiagramm dargestellt. Vg repräsentiert die im Bild gemessene Gesamtverschiebung eines Objekts. Dieser Vektor lässt sich in die gemessene Gesamtverschiebung in X-Richtung Xg und in Y-Richtung Yg aufteilen. Yb bezeichnet die berechnete Verschiebung in Y-Richtung, die wie zuvor erläutert für ein stehendes Objekt berechnet wurde. Yd gibt genau die Differenz zwischen berechneter und gemessener Verschiebung in Y-Richtung und damit den Einfluss der Nickbewegung an.

**Patentansprüche**

**1.** Verfahren zur Erkennung von Frontscheinwerfern und Rücklichtern eines Fahrzeugs mit einem Farbkamerasensor und einer Datenverarbeitungseinheit, wobei der Farbkamerasensor eine Mehrzahl von Pixeln, die nur für rotes Licht empfindlich sind, und eine Mehrzahl von Pixeln, die für andere Lichtfarben empfindlich sind, umfasst, wobei in einem ersten Auswerteschritt zur Selektion von Lichtpunkten im Bild ausschließlich die Intensität der Pixel, die für rotes Licht empfindlich sind, ausgewertet werden, **dadurch gekennzeichnet, dass**

> i) Lichtpunkte mit einer Intensität des roten Lichts oberhalb eines vorgegebenen Schwellwerts als potentielle Fahrzeugscheinwerfer identifiziert werden,
> ii) Lichtpunkte mit einer Intensität unterhalb eines vorgegebenen Schwellwerts als potentielles Fahrzeugrücklicht identifiziert werden,

wobei Lichtpunkte helle Bereiche im Kamerabild mit einer beliebigen Form sind, die als lokale Maxima der Intensität der Pixel, die für rotes Licht empfindlich sind, ermittelt werden.

**2.** Verfahren nach Anspruch 1, **dadurch gekennzeichnet, dass** bei Lichtpunkten, die potentielle Fahrzeugrücklichter sind, die Intensität der Pixel, die nur für rotes Licht empfindlich sind, mit der Intensität zumindest eines Pixels, der für eine anderen Farbe empfindlich ist, verglichen wird, und rote Lichter als Fahrzeugrückleuchten identifiziert werden.

**3.** Verfahren nach Anspruch 1, **dadurch gekennzeichnet, dass** bei Lichtpunkten, die potentielle Fahrzeugrücklichter sind, zudem der zeitliche Intensitätsverlauf und/oder die absolute Intensität und/oder die zeitabhängige Bewegung des Lichtpunkts im Bild betrachtet wird, um Fahrzeugrücklichter von anderen Lichtpunkten zu unterscheiden.

**4.** Verfahren nach Anspruch 1, **dadurch gekennzeichnet, dass** bei Lichtpunkten, die potentielle Fahrzeugscheinwerfer sind, zudem der zeitliche Intensitätsverlauf und / oder die absolute Intensität und/oder die zeitabhängige Bewegung des Lichtpunkts im Bild betrachtet wird, um Fahrzeugscheinwerfer von anderen Lichtpunkten zu unterscheiden.

**5.** Kraftfahrzeug mit einem Kamerasensor und Bilddaten-Verarbeitungsprogramm, in dem ein Verfahren nach Anspruch 1-4 implementiert ist.

**Claims**

**1.** A method for detecting headlights and tail lights of a motor vehicle with a colour camera sensor and a data processing unit, wherein the colour camera sensor comprises a plurality of pixels which are only sensitive to red light and a plurality of pixels which are sensitive to other light colours, wherein in a first evaluation stage for selecting points of light in the image, only the intensity of the pixels which are sensitive to red light is evaluated, **characterized in that**

> i) Points of light with an intensity of the red light above a specified threshold value are identified as potential motor vehicle headlights
> ii) Points of light with an intensity below a specified threshold value are identified as a potential motor vehicle tail light

wherein points of light are bright areas in the camera image with any type of form, which are determined as the local maxima of the intensity of the pixels which are sensitive to red light.

**2.** A method according to claim 1 **characterized in that** with points of light which are potential motor vehicle tail lights, the intensity of the pixels which are only sensitive to red light is compared with the intensity of at least one pixel which is sensitive to another colour, and red lights are identified as motor vehicle tail lights.

**3.** A method according to claim 1 **characterized in that** with points of light which are potential motor vehicle tail lights, furthermore the time intensity progression and/or the absolute intensity and/or the time-dependent movement of the point of light in the image is assessed in order to differentiate between motor vehicle tail lights and other points of light.

**4.** A method according to claim 1 **characterized in that** with points of light which are potential motor vehicle headlights, furthermore the time intensity progression and/or the absolute intensity and/or the time-dependent movement of the point of light in the image is assessed in order to differentiate between motor vehicle headlights and other points of light.

5. A motor vehicle with a camera sensor and image data processing programme in which a method according to claims 1-4 is implemented.

**Revendications**

1. Procédé de détection de phares avant et de feux arrière d'un véhicule avec un détecteur à caméra couleur et une unité de traitement de données, le détecteur à caméra couleur comprenant une multiplicité de pixels qui ne sont sensibles qu'à la lumière rouge, et une multiplicité de pixels qui sont sensibles à d'autres couleurs de lumière, seule l'intensité des pixels qui sont sensibles à la lumière rouge étant analysée dans une première étape d'analyse pour la sélection de points lumineux dans l'image, **caractérisé en ce que**

   i) des points lumineux ayant une intensité de la lumière rouge supérieure à une valeur de seuil prédéfinie sont identifiés en tant que phares de véhicule potentiels,
   ii) des points lumineux ayant une intensité inférieure à une valeur de seuil prédéfinie sont identifiés en tant que feu arrière de véhicule potentiel,

   les points lumineux étant des zones claires dans l'image caméra ayant n'importe quelle forme qui sont déterminées en tant que maximas locaux de l'intensité des pixels qui sont sensibles à la lumière rouge.

2. Procédé selon la revendication 1,
   **caractérisé en ce que**,
   pour des points lumineux qui sont des feux arrière de véhicule potentiels,
   l'intensité des pixels qui ne sont sensibles qu'à la lumière rouge est comparée à l'intensité d'au moins un pixel qui est sensible à une autre couleur, et des lumières rouges sont identifiées en tant que blocs optiques arrière de véhicule.

3. Procédé selon la revendication 1,
   **caractérisé en ce que**,
   pour les points lumineux qui sont des feux arrière de véhicule potentiels, l'allure de l'intensité dans le temps et/ou l'intensité absolue et/ou le mouvement en fonction du temps du point lumineux dans l'image sont également pris en compte pour distinguer des feux arrière de véhicule d'autres points lumineux.

4. Procédé selon la revendication 1,
   **caractérisé en ce que**,
   pour des points lumineux qui sont des phares de véhicule potentiels, l'allure de l'intensité dans le temps et/ou l'intensité absolue et/ou le mouvement en fonction du temps du point lumineux dans l'image sont également pris en compte pour distinguer des phares de véhicule d'autres points lumineux.

5. Véhicule automobile avec un détecteur à caméra et un programme de traitement de données vidéo, dans lequel est mis en oeuvre un procédé selon les revendications 1 à 4.

Fig. 1

Fig. 2

Fig. 3

$$Vg = Xg + Yg$$
$$Vb = Xg + Yb$$
$$Yd = Yg - Yb$$

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19820348
- US 20020040962 A1
- US 5990469 A